Europäisches Patentamt

European Patent Office

Office européen des brevets

(19)

(11) EP 0 922 494 A1

(12) DEMANDE DE BREVET EUROPEEN

(43) Date de publication:
16.06.1999 Bulletin 1999/24

(51) Int Cl.$^6$: **B01J 38/12**, B01J 23/90, B01J 23/96, B01J 29/90

(21) Numéro de dépôt: 98403027.0

(22) Date de dépôt: 03.12.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 08.12.1997 FR 9715468

(71) Demandeur: INSTITUT FRANCAIS DU PETROLE
92500 Rueil Malmaison (FR)

(72) Inventeurs:
• Clause, Olivier
  78400 Chatou (FR)
• Euzen, Patrick
  92500 Rueil Malmaison (FR)
• Lunati, Sabine
  92000 Nanterre (FR)
• Mabilon, Gil
  78420 Carrieres sur Seine (FR)

(54) **Procédé de régénération de catalyseurs et d'absorbants**

(57) L'invention concerne un procédé pour la régénération d'une masse usée ayant été utilisée pour le traitement de charges hydrocarbonées, ladite masse comprenant au moins un oxyde réfractaire et/ou au moins un tamis moléculaire. procédé comprenant une étape de combustion de la matière organique fixée sur ladite masse usée, étape qui se déroule en présence d'un gaz comburant contenant de l'oxygène et un gaz inerte, procédé dans lequel ledit gaz contient également au moins un oxyde d'azote NxOy tel que y/x > 0,5, ledit procédé opérant entre 200-700°C, sous une pression totale de 0,1-4 MPa, et avec une teneur molaire en oxyde d'azote dans le gaz comburant de 0,0001-20 %.

De préférence, l'oxyde d'azote est NO ou $NO_2$

EP 0 922 494 A1

**Description**

La présente invention concerne un procédé pour la régénération de masses usées ayant été utilisées pour le traitement de charges hydrocarbonées par catalyse hétérogène ou par adsorption, par exemple en raffinage, chimie ou pétrochimie, et tout particulièrement les masses utilisées pour des charges contenant au plus 2 000 ppm d'azote.

Les catalyseurs hétérogènes sont à base de matériaux solides utilisés dans un milieu liquide et/ou gazeux pour accélérer des réactions chimiques. L'activité catalytique caractérise le rapport entre la vitesse de la réaction chimique et la quantité de catalyseur mis en oeuvre. Lorsqu'un réactif peut être transformé selon plusieurs réactions, la sélectivité du catalyseur représente sa capacité à orienter la transformation du réactif plutôt selon une réaction que selon une autre.

Le matériau catalytique est généralement constitué de plusieurs composants parmi lesquels on rencontre fréquemment des oxydes et/ou des métaux et/ou des sulfures.

Les oxydes jouent directement le rôle de catalyseur et/ou servent de supports à des phases actives à base de métaux ou de sulfures. Leur surface spécifique et leur répartition poreuse doivent être adaptées pour l'obtention d'une activité, d'une sélectivité et d'une stabilité élevées. Par exemple, la surface spécifique des supports de catalyseurs doit être suffisamment élevée pour permettre d'obtenir un grand état de division des métaux supportés ; ainsi, les alumines de transition utilisées en reformage catalytique présentent des surfaces spécifiques généralement comprises entre 100 et 300 m2/g et la dispersion du platine est comprise entre 80 et 100 %. En outre, lorsque les oxydes jouent le rôle de catalyseurs ils doivent présenter des propriétés physico-chimiques spécifiques. Le nombre et la force des sites acides de surface doivent être adaptés aux réactions visées. Par exemple, des sites acides forts sont nécessaires aux réactions de craquage catalytique ou d'isomérisation des hydrocarbures.

Les oxydes peuvent être des oxydes simples comme les oxydes d'aluminium, de silicium, de titane, de zirconium, de gallium, de cérium, de lanthane, de vanadium. de nickel, de fer, de molybdène, de cobalt, de tungstène. Ils peuvent aussi être combinés sous forme d'oxydes mixtes. Certains oxydes mixtes sont des mélanges de phases comme par exemple les silice-alumines. D'autres sont de véritables oxydes mixtes dans lesquels un ou plusieurs éléments sont soit en solution solide dans une matrice soit forment une véritable structure mixte. Dans cette dernière catégorie figurent les zéolithes. Celles-ci présentent de nombreux types structuraux comme définis dans l'Atlas of Zeolite Structure Types de W. H. Meier, D. H. Olson and Ch. Baerlocher paru chez Elsevier (1996), et comprennent généralement du silicium et de l'aluminium et/ou un grand nombre d'autres éléments comme le bore, le titane, le phosphore, le gallium, les éléments des terres rares. D'autres véritables oxydes mixtes sont utilisés en catalyse : les structures les plus fréquentes sont les pyrochlores, les ferrites, les manganites, les pérovskites. Les éléments qu'ils contiennent peuvent être très variés comme par exemple le fer, le manganèse, le cuivre, le zinc, le cobalt, le lanthane, le cérium, le zirconium, le titane, le silicium, l'aluminium. Les oxydes simples ou mixtes peuvent être modifiés chimiquement par introduction de composés sous forme anionique tels que les anions sulfates ou phosphates.

Les métaux les plus habituels dans les catalyseurs appartiennent par exemple aux groupes IB, IVA, VIIB, VIII du tableau périodique tels que le platine, le palladium, le rhodium, l'iridium, l'étain, le rhénium, le cuivre, le cobalt, le nickel, le manganèse, l'argent et l'or. On utilise les catalyseurs contenant des métaux par exemple dans les réactions d'isomérisation, d'hydrogénation, de déshydrogénation, de cyclisation, d'oxydation partielle ou totale des composés organiques. L'amélioration des performances des catalyseurs est fréquemment obtenue en combinant les propriétés de plusieurs métaux, ainsi, par exemple les catalyseurs de reformage catalytique qui comprennent, entre autres, du platine et de l'étain ou du rhénium. Ces métaux ou leur combinaison sont quelquefois utilisés sous forme massique mais plus généralement sous forme supportée. Les métaux supportés sont déposés sur un support de grande surface spécifique et de porosité adaptée à la diffusion des réactifs et des produits de la réaction recherchée. Les supports les plus couramment utilisés appartiennent à la famille des oxydes simples ou mixtes décrits précédemment. Les supports à base de silice ou d'alumines sont parmi les plus utilisés.

De nombreux catalyseurs contiennent des sulfures, par exemple pour les réactions d'hydrotraitement des coupes pétrolières. Les principales réactions impliquées dans l'hydrotraitement sont l'hydrodésulfuration, l'hydrodéazotation, l'hydrogénation, l'hydrocraquage, l'hydrodémétallation. Les sulfures métalliques les plus utilisés sont les sulfures simples ou mixtes de molybdène, cobalt, nickel, tungstène, ruthénium, rhénium; niobium. Ces catalyseurs à base de sulfures sont utilisés seuls ou en association avec d'autres catalyseurs.

La morphologie des catalyseurs doit être adaptée aux réactions visées, aux contraintes diffusionnelles et aux procédés de mise en oeuvre.

Les morphologies les plus communes sont les billes, les extrudés, les pastilles et les anneaux qui trouvent des applications tant dans les lits fixes que les lits mobiles ou bouillonnants. Ils présentent des dimensions généralement comprises entre une fraction de millimètre et 20 mm, les dimensions les plus habituelles étant comprises entre 1 et 5 mm.

Pendant leur mise en oeuvre, les catalyseurs sont en contact avec des composés organiques qui se transforment. Il reste alors fixé sur ces catalyseurs de la matière organique (initiale ou transformée) appelée coke. Pour les catalyseurs de reformage des essences, le taux de coke en sortie de réacteur varie entre 2 et 25 % poids. De même, les catalyseurs d'isomérisation des paraffines légères contenant entre 4 et 8 atomes de carbone, zéolithiques ou amorphes (alumines chlorées), se recouvrent progressivement d'un dépôt polymérique s'apparentant à un coke très hydrogéné. Les catalyseurs de déshydrogénation des paraffines, qu'ils soient de type oxyde supporté, par exemple des oxydes de chrome supportés sur alumine, ou de type catalyseur bimétallique supportés sur alumine contenant un élément alcalin, se recouvrent progressivement lors de la réaction d'un dépôt de matière organique s'apparentant au "coke" des catalyseurs de reformage catalytique.

Cette matière organique recouvre les sites actifs du catalyseur ce qui entraîne une baisse de l'activité catalytique et fréquemment une modification de la sélectivité du catalyseur. Le réseau poreux du catalyseur étant obstrué par de la matière organique, les réactifs et produits ont plus de difficulté à diffuser vers les sites actifs ce qui accroît la dégradation des performances du catalyseur. Il apparaît donc indispensable d'éliminer cette matière organique présente dans le catalyseur.

Un autre type de matière organique se rencontre dans les adsorbants, c'est-à-dire les matériaux contenant des tamis moléculaires qui sont mis en oeuvre dans des procédés de séparation. On peut citer, par exemple, les séparation des n- et iso-paraffines opérées à la suite de l'isomérisation des paraffines légères, de façon à recycler les n-paraffines non converties et des paraffines mono branchées à l'isomérisation. Comme autre exemple, le métaxylène peut être séparé de l'ortho et du paraxylène puis recyclé à l'isomérisation de la coupe C8, au moyen de procédés développés à partir de tamis moléculaires. Les matériaux contenant les tamis moléculaires sont généralement sous forme de billes ou extrudés, et ils contiennent un liant, par exemple une argile ou un produit dérivé d'un gel d'alumine. Les procédés de séparation peuvent être opérés en phase liquide, mixte ou gaz, par exemple en phase liquide en contre courant simulé, ou en phase gaz en mode PSA (Pressure Swing Adsorption) ou TSA (Temperature Swing Adsorption). L'expérience montre, en conditions industrielles, une diminution progressive de la capacité d'adsorption ou de la sélectivité de l'adsorption, liée au dépôt de matière organique hydrocarbonée obstruant partiellement l'entrée de la porosité. La cinétique du dépôt dépend des conditions opératoires, en particulier la température, la pression opératoire et la pression partielle d'hydrogène. Au terme d'une période donnée, il apparaît indispensable d'éliminer le dépôt organique pour recouvrer les caractéristiques initiales du tamis moléculaire.

Pour ces catalyseurs et adsorbants, l'élimination de la matière organique est actuellement réalisée par combustion dans un gaz comburant contenant de l'oxygène. L'oxygène se combine à la matière organique en libérant des oxydes de carbone, de l'eau et éventuellement d'autres composés si la matière organique contient des hétéroatomes tels que du soufre, du phosphore ou de l'azote.

L'élimination de la matière organique libère la surface du catalyseur ce qui lui permet de retrouver son activité catalytique et/ou sa sélectivité. Cette opération est incluse dans le procédé de régénération de la masse (catalyseur, adsorbant), procédé qui peut comporter d'autres étapes ultérieures, telles que par exemple oxychloration et calcination pour les catalyseurs de reformage. Cependant, la combustion de la matière organique dégage localement une grande quantité de calories ce qui entraîne une forte élévation de la température au sein du catalyseur. Cette élévation de température provoque un dégradation du catalyseur par différents processus tels que transformation structurale, combinaison chimique et/ou frittage et/ou évaporation de ses constituants. La combustion de matière organique lors de la régénération des catalyseurs peut donc être préjudiciable à l'obtention d'un catalyseur actif et/ou sélectif. De plus, le dégagement de chaleur en présence d'une pression partielle de vapeur d'eau peut être très dommageable à la cristallinité des tamis moléculaires ou des zéolithes mis en oeuvre dans les procédés de séparation par adsorption.

Plusieurs solutions technologiques ont déjà été élaborées pour limiter la dégradation thermique des catalyseurs ou de matériaux contenant des tamis moléculaires lors de la combustion de la matière organique qu'ils contiennent. Elles consistent à diminuer le dégagement de calories lors de la combustion ou à éliminer les calories par un courant gazeux, l'objectif étant de diminuer la température maximale que subit le matériau.

La solution la plus usuelle consiste à diminuer la teneur en oxygène du gaz comburant. En effet, lorsque le gaz comburant est de l'air la concentration en oxygène dans la phase gazeuse est de environ 21 %. Une teneur aussi élevée permet un très fort dégagement local de calories. Un calcul approché montre que l'élévation de température du gaz provoquée par l'oxydation en milieu adiabatique de matière carbonée est de l'ordre de 3000°C. En réduisant la teneur en oxygène par dilution dans de l'azote on dilue les calories dégagées par la combustion ce qui limite l'élévation de température dans le gaz de combustion. Par exemple, si le gaz comburant ne contient que 1 % d'oxygène, l'élévation de température du gaz en milieu adiabatique sera de l'ordre de 150°C. Cependant, l'élévation de température du solide peut être très supérieure à l'élévation de température du gaz si la conduction thermique du solide est faible. De plus, la diminution de la teneur en oxygène du gaz comburant ralentit la vitesse de combustion, donc la température de démarrage de l'oxydation, ce qui impose de chauffer le matériau catalytique a une température élevée pour que la matière organique commence à être oxydée. L'effet bénéfique de la diminution du dégagement local de calories se trouve donc en partie compensé par l'élévation de température nécessaire au démarrage de l'oxydation.

Une autre solution consiste à réaliser des alternances entre phases d'oxydation et passages sous gaz inerte. Le matériau sur lequel la phase organique doit être brûlée est alternativement soumis à un traitement sous gaz comburant puis sous gaz inerte de façon à ne permettre qu'une transformation partielle de la matière organique lors de chaque phase sous gaz comburant. Les calories dégagées par la combustion sont stockées par le matériau et transmises au gaz inerte lorsque celui-ci est admis sur le matériau. Cette solution pose de délicats problèmes de contrôle du procédé. La concentration en oxygène dans le gaz comburant pouvant être élevée, la température de début d'oxydation de la matière organique est plus basse que selon la solution précédente. Cependant, l'élévation de température peut être très élevée si le passage sous gaz inerte n'est pas réalisé au bon moment.

Ces différentes solutions ne permettent donc une élimination totale de la matière organique présente dans les catalyseurs qu'au prix d'une élévation sensible de la température locale pouvant entraîner une dégradation des performances des catalyseurs régénérés ou des catalyseurs issus de leurs précurseurs.

Des travaux de recherche ont permis de découvrir que, de façon surprenante, et c'est l'objet de l'invention, le traitement d'un catalyseur usé contenant de la matière organique, par un gaz comburant tel que décrit précédemment, et comprenant au moins un oxyde d'azote tel que décrit ci-après permet d'améliorer sensiblement les performances du catalyseur régénéré.

Plus précisément, l'invention concerne un procédé pour la régénération d'une masse usée ayant été utilisée pour le traitement de charges hydrocarbonées, ladite masse comprenant au moins un oxyde réfractaire et/ou au moins un tamis moléculaire, procédé comprenant une étape de combustion de la matière organique fixée sur ladite masse usée, étape qui se déroule en présence d'un gaz comburant contenant de l'oxygène et un gaz inerte, procédé dans lequel ledit gaz contient également au moins un oxyde d'azote NxOy tel que y/x > 0,5, ledit procédé opérant entre 200-700°C, sous une pression totale de 0,1-4 MPa, et avec une teneur molaire en oxyde d'azote dans le gaz de 0,0001-20 %. L'invention s'applique donc aux catalyseurs ne contenant pas de zéolithes et comprenant au moins un oxyde simple; elle s'applique également aux catalyseurs zéolithiques ; elle est très avantageusement appliquée à la régénération des adsorbants (contenant avantageusement un tamis moléculaire).

Les charges hydrocarbonées traitées sont très variées mais elles contiennent moins de 2000ppm d'azote, de préférence moins de 1000ppm, avantageusement moins de 200ppm.

Les oxydes d'azote NxOy selon l'invention présentent un rapport y/x supérieur à 0,5. Ils appartiennent de manière non limitative au groupe comprenant les oxydes d'azote NO, NO2, N2O3, NO3, N2O4, N2O5, N2O6. De préférence, NO ou NO2 sont employés. Ces composés sont mis en oeuvre tels quels ou sous forme d'un ou plusieurs précurseurs minéraux ou organiques. Par décomposition thermique ou catalytique ou par passage dans un champ électromagnétique ou un plasma, le ou les précurseurs sont susceptibles de libérer au moins un des oxydes d'azote cités dans l'invention. Parmi les précurseurs minéraux, on peut citer les acides et sels des anions nitrates $NO_3^-$ et nitrites $NO_2^-$ ou encore les sels des cations nitryl $NO_2^+$, nitrosyl $NO^+$ ou ammonium $NH_4^+$, et l'ammoniac gaz ou en solution aqueuse. Parmi les précurseurs organiques, on peut citer les composés hydrocarbonés contenant une fonction nitro $NO_2$, nitroso $NO$, amino $NH_2$ ou encore ammonium $NH_4^+$. Le précurseur minéral ou organique peut être mis en oeuvre tel quel ou en solution dans un solvant. La quantité de précurseur introduite est calculée de façon à ce que la fraction molaire d'oxyde d'azote dans le gaz soit suffisante selon l'invention. La température de l'étape de combustion doit alors être au moins égale à la température de décomposition du précurseur en oxyde d'azote si le précurseur est introduit directement dans la zone de combustion. On peut tout aussi bien procéder à la décomposition du précurseur en-dehors de la (des) zone(s) de combustion et introduire dans l'étape de combustion le produit gazeux obtenu.

Le ou les oxydes d'azote ou leurs précurseurs organiques ou minéraux peuvent être mélangés au gaz comburant avant qu'il n'entre dans la zone de combustion de la matière organique ou être injecté directement dans la zone de combustion. L'introduction peut être continue ou discontinue. Ils peuvent aussi être mis en contact avec la masse à régénérer préalablement à la combustion. Cette mise en contact peut être réalisée, par exemple, par imprégnation de la masse par une solution aqueuse de sels solubles tels que les nitrates ou par passage au travers de la masse d'un flux gazeux contenant un ou des oxydes d'azote ou selon toute autre technique connue de l'homme de l'art. Dans ce cas, la température de l'étape de combustion est au moins égale à la température de décomposition du précurseur en oxyde d'azote

Le gaz comburant contient majoritairement au moins un gaz inerte et un gaz oxydant. Le gaz inerte est préférentiellement l'azote mais tout autre gaz inerte comme l'argon ou l'hélium peut être utilisé. Le gaz oxydant est préférentiellement l'oxygène ou ses précurseurs. Parmi les précurseurs de l'oxygène on peut citer à titre d'exemple, l'ozone ou l'eau oxygénée. La fraction molaire en gaz oxydant est comprise entre 0,001 et 90 %, avantageusement entre 0,001 et 40 % ou mieux 0,1 à 40% et de préférence entre 0,1 et 25 %.

Le débit de gaz comburant est compris entre 0,1 et 200 m3/h/kg de masse à traiter. Ce débit est avantageusement choisi entre 1 et 30 m3/h/kg. La pression opératoire relative de la combustion selon l'invention est comprise entre 0,1 et 4 MPa, de préférence entre 0,1 et 1,5 MPa.

Quel que soit le mode d'introduction du ou des oxydes d'azote, ou de leurs précurseurs, la quantité introduite est exprimée sous forme de fraction molaire d'oxydes d'azote par rapport au gaz comburant. Cette fraction molaire peut varier entre 0,0001 et 20 % de préférence 0,01 à 5 %. Généralement, il n'y a pas besoin de teneurs élevées en oxydes d'azote dans le gaz, de 1-5000 ppm sont habituellement suffisants, ou mieux 1-2500 ppm, voire 1-1000 ppm, on a également tendance à réduire ces teneurs au dessous de 500ppm, avantageusement 1-400ppm ; des teneurs aussi faibles que 1-300ppm, 1-200ppm ou 1-100ppm peuvent même être suffisantes.

Le domaine de température d'élimination de la matière organique selon l'invention s'étend de 200 à 700°C avec, pour préférence, une température supérieure à 300°C et très avantageusement l'intervalle de température 320 à 550°C. Généralement, la température sera supérieure à 350°C et de préférence supérieure à 360°C. La durée de la combustion selon l'invention varie de 0,1 à 50 h et de préférence de 0,2 à 3 h.

Le procédé selon l'invention s'applique plus spécifiquement aux catalyseurs de raffinage des coupes pétrolières susceptibles de fixer de la matière organique appelée coke. Il s'applique encore plus spécifiquement aux catalyseurs dont la teneur en azote dans le coke est faible, en particulier lorsque le rapport atomique N/C du coke est inférieur à 0,1, souvent inférieur à 0,05 et plus particulièrement inférieur à 0,01. Ces conditions sont celles rencontrées dans la régénération des catalyseurs de reformage des essences, des catalyseurs d'isomérisation et en particulier d'isomérisation des coupes légères riches en n-alcanes ou de coupes C8 aromatiques, des catalyseurs d'alkylation des composés aromatiques, des catalyseurs de craquage des charges pétrolières peu azotées en particulier des coupes aromatiques, des catalyseurs d'hydrotraitement des coupes légères, des catalyseurs de déparaffinage catalytique, ainsi qu'aux catalyseurs de déshydrogénation des paraffines. Avant leur traitement par ces catalyseurs, ces charges ont été de préférence hydrotraitées.

Notons que par hydrotraitement, on entend d'hydrodésulfuration, d'hydrodéazotation, l'hydrodémétallation et l'hydrocraquage.

Sont également concernés les catalyseurs d'hydrogénation, de cyclisation, d'oxydation partielle, de métathèse.

Les catalyseurs utilisés pour les procédés de déshydrogénation, d'hydrogénation, de cyclisation, les isomérisations et procédés d'hydrocraquage contiennent souvent au moins un métal noble du groupe VIII, et le plus souvent il s'agit du platine.

On décrit ici très brièvement les principaux types de catalyseurs rencontrés dans les procédés cités.

Les catalyseurs d'hydrocraquage contiennent un support amorphe, éventuellement une zéolithe (Y de préférence) et au moins un métal hydro-déshydrogénant, habituellement choisi parmi les métaux des groupes VIII et VI B. Le métal du groupe VIII peut-être noble ou non-noble, et dans ce dernier cas il est généralement associé à un métal du groupe VI B.

Les charges hydrocarbonées traitées ont des points d'ébullition initiaux d'au moins 150°C, de préférence au moins 350°C, et plus avantageusement c'est une coupe bouillante entre 350-580°C, et elles ont été si besoin préalablement hydrotraitées pour abaisser leur teneur en soufre et azote.

Les catalyseurs d'hydrogénation contiennent généralement un support oxyde réfractaire et au moins un métal hydro-déshydrogénant qui est généralement un métal noble du groupe VIII.

Les catalyseurs de déshydrogénation contiennent généralement un support oxyde réfractaire contenant éventuellement au moins un métal alcalin, le catalyseur contient au moins un métal hydro-déshydrogénant et éventuellement un métal additionnel (tel que l'étain). Avantageusement la régénération est effectuée au lit mobile, intégrée au procédé de déshydrogénation.

Les catalyseurs d'alkylation peuvent être à base de zéolithe (ZSM-5. mordénite).

Les catalyseurs d'hydrotraitement contiennent généralement outre un support amorphe, au moins un métal hydro-déshydrogénant choisi parmi les métaux des groupes VIII non noble et VI B. La teneur en coke des catalyseurs usés varie habituellement entre 1-35%. Les catalyseurs pour l'isomérisation des paraffines sont à base de support oxyde réfractaire et d'au moins un métal hydro-déshydrogénant.

Les catalyseurs d'isomérisation des coupes C 8 aromatiques contiennent généralement une zéolithe (MFI par exemple) et au moins un élément hydro-déshydrogénant qui est généralement un métal noble du groupe VIII, généralement le platine.

Les catalyseurs d'isomérisation squelettale contiennent un support d'oxyde réfractaire et au moins un métal hydro-déshydrogénant qui est souvent un métal noble du groupe VIII tel que le platine, et le support (alumine préféré) peut-être halogéné (chlore préféré). Le catalyseur peut contenir une zéolithe ; parmi les zéolithes la mordénite a été la plus utilisé.

Le procédé de régénération peut-être effectué au lit fixe ou au lit mobile intégré au procédé d'isomérisation.

Les catalyseurs de déparaffinage catalytique sont zéolithiques ou non zéolithiques, ou peuvent contenir des tamis moléculaires non zéolithiques (SAPO). Parmi les zéolithes, on peut citer NU-85, -86, -87, -88, EU-1, ferrierite, ZSM-22, -23, la zéolithe bêta, SSZ-37 etc...

Les catalyseurs de craquage catalytique contiennent outre un support amorphe, une zéolithe en général zéolithe Y et chargée généralement en terre(s) rare(s), et éventuellement un additif.

Le procédé et la régénération s'effectuent, de façon classique, en lit fluidisé.

Les catalyseurs de métathèse contiennent un support oxyde réfractaire et au moins un métal tel que le rhénium, le molybdène, le tungstène. Le catalyseur est régénéré en lit fixe ou en lit mobile, le procédé de métathèse étant alors avec circulation du catalyseur en lit mobile.

D'une façon générale, le procédé selon l'invention s'applique à des catalyseurs contenant ou ne contenant pas au moins un tamis moléculaire qui peut-être une zéolithe, un silicoaluminophosphate (SAPO), ALPO, MAPO...

Parmi les zéolithes, on peut-être citer plus particulièrement les zéolithes suivantes avec les zéolithes de même type structural : la zéolithe bêta, la zéolithe Y, oméga, mordénite, ferrierite, EU-1, NU-85, NU-86, NU-87, NU-88, IM-5, ZSM-5, -23, SSZ-37, zéolithe L et leurs produits dérivés (par ex dopés).

Le procédé selon l'invention présente l'avantage de réduire fortement la température de début et de fin d'oxydation de la matière organique. Il évite les transformations physico-chimiques associées aux élévations de température locale, ce qui améliore la durée de vie des catalyseurs et leur résistance mécanique. Ainsi que le montreront les exemples, l'utilisation du procédé selon l'invention permet de réduire les températures de combustion d'au moins 20°C, et généralement d'au moins 30°C, et même d'au moins 50°C dans les exemples. On constate habituellement une diminution de 20-70°C.

Un autre avantage du procédé est son coût faible. L'introduction d'oxydes d'azote est peu onéreuse en particulier dans le cas où ces composés sont introduits sous forme de précurseurs type acide nitrique ou solutions de nitrates, ou sous forme de gaz généré par un brûleur (combustion de gaz naturel par exemple).

Le procédé selon l'invention entraîne le rejet de traces d'oxydes d'azote dans les effluents de combustion. Dans les conditions opératoires mises en oeuvre pour le procédé selon l'invention, les quantités d'oxydes d'azote rejetées sont généralement inférieures aux limites réglementaires, ce qui ne pose aucun problème. Dans certains cas, elles pourraient être légèrement supérieures aux limites, et dès lors les effluents sont traités dans les dispositifs d'élimination des oxydes d'azote déjà implantés sur la plupart des fours de calcination ou des réacteurs de régénération. Ces dispositifs sont basés sur différentes technologies telles que l'absorption des oxydes d'azote par de l'eau ou des solutions basiques, l'absorption sur des masses de captation solides ou la réduction catalytique par l'ammoniac, l'urée ou les hydrocarbures.

Le procédé suivant l'invention peut être mis en oeuvre, très simplement, sur les unités industrielles lors des phases de régénération du catalyseur ou de l'adsorbant. Par exemple, NO ou l'acide nitrique peuvent être ajoutés au gaz entrant dans la zone de combustion lors de la régénération des catalyseurs de reformage pour le procédé semi-régénératif ou régénératif. De même, dans le cas des procédés à régénération séquentielle ou continue, NO ou l'acide nitrique peuvent être introduits en amont des zones de combustion. La régénération des catalyseurs selon l'invention s'effectue donc simplement par l'addition d'oxyde(s) d'azote ou de précurseur(s) d'oxyde(s) d'azote au milieu présent pour la combustion.

La régénération a lieu en lit fixe, mobile, fluidisé... La combustion est généralement effectuée en présence d'oxygène dilué par un gaz inerte (utilisation d'air), la température et la teneur en oxygène étant ajustées pour obtenir la combustion de la matière organique présente sur le catalyseur. Généralement, elle se termine vers 600°C ou 700°C et souvent plutôt vers 500°C lorsqu'il y a risque de dégradation de la zéolithe et/ou frittage. C'est le cas par exemple de la régénération des catalyseurs d'hydrotraitement, d'isomérisation des C8, d'isomérisation des paraffines etc...

Le procédé suivant l'invention peut également être mis en oeuvre pour les régénérations menées hors site, c'est à dire, par exemple, chez une société spécialisée dans le retraitement des catalyseurs. Il suffit également d'introduire l'agent précurseur des oxydes d'azote en amont du ou des fours de combustion, qu'ils soient en lit traversé, lit léché, bouillonnant, ou tout autre procédé connu de l'homme de l'art.

Les exemples qui suivent illustrent l'invention sans toutefois en limiter la portée.

EXEMPLE 1: Traitement comparatif de régénération d'un catalyseur de reformage avec introduction de NO.

**[0039]** Un catalyseur est préparé suivant les techniques de l'art antérieur. Une quantité de 100g d'un support alumine γ est mis au contact pendant 3h avec 500 cm3 d'une solution aqueuse d'acide chlorhydrique. Sur le produit séché contenant du chlore, on procède à l'imprégnation du platine et de l'étain en ajoutant au solide 800 cm3 d'une solution d'acide hexachloroplatinique et de chlorure stannique. La mise en contact dure 5h, le séchage 1h à 120°C et la calcination 3h sous air à 530°C. Le catalyseur contient 0,35 % poids de platine, 0,20 % poids d'étain et 0,9 % poids de chlore.

Le catalyseur est désactivé par cokage pendant 4 h à 510°C sous 0,1 MPa en présence d'hydrogène et de n-heptane sous un débit massique n-heptane/catalyseur de 2 h-1 et un rapport molaire hydrogène/hydrocarbure de 0,5. La teneur en carbone obtenue est dans ces conditions de 6,1 % poids.

Des oxydations en température programmée sont menées sur 25 mg de catalyseur sous mélange oxygène/azote à 1 % poids d'oxygène (Figure 1). En l'absence de NO, la consommation d'oxygène présente un maximum vers 560°C. D'autres essais sont menés avec une teneur variable en NO, soit 100 et 800 ppm, introduit sous forme gazeuse. Il apparaît que le pic de consommation en oxygène est déplacé vers les températures plus faibles. Le maximum de consommation en oxygène est, dans les deux cas, situé vers 500°C, soit un gain de près de 60°C par rapport au comburant ne contenant pas de NO. L'effet bénéfique de l'introduction de NO est sensible à partir de 5 ppm. En présence de 100 ppm de NO, la combustion est achevée vers 550°C, alors que en l'absence de NO le maximum de consommation d'oxygène est justement observé vers 550-560°C.

Il en résulte un gain substantiel de surface spécifique pour le catalyseur au terme de plusieurs régénérations opérées en présence de NO. 50 cycles de cokage-brûlage du coke en l'absence de NO dans le gaz comburant (1 % O2 dans N2) conduisent à une diminution de la surface spécifique du catalyseur de 210 m2/g (catalyseur neuf) à 175 m2/g. En présence de 100 ppm de NO dans le gaz comburant, 50 cycles cokage-brûlage font passer la surface spécifique de 210 à 195 m2/g, soit un gain considérable de 20 m2/g par rapport à l'observation sans NO.

EXEMPLE 2 : Traitement comparatif de régénération d'un catalyseur d'isomérisation des paraffines légères avec introduction de NO.

[0043] Un catalyseur est préparé suivant les techniques de l'art antérieur. Une quantité de 100 g d'un support alumine η est mis au contact pendant 3 h avec 500 cm3 d'une solution aqueuse d'acide chlorhydrique. Sur le produit séché contenant du chlore, on procède à l'imprégnation du platine en ajoutant au solide 800 cm3 d'une solution d'acide hexachloroplatinique. La mise en contact dure 5h, le séchage 1h à 120°C et la calcination 3h sous air à 530°C. La chloration est ensuite effectuée sous mélange CCl4/O2/N2 pendant 6 h à 300°C. Le catalyseur contient 0,35 % poids de platine et 11 % poids de chlore.

Le catalyseur est désactivé par cokage pendant 2400 h à 190°C sous 3 MPa en présence d'hydrogène et de n-hexane sous un débit massique n-hexane/catalyseur de 1 h-1 et un rapport molaire hydrogène/hydrocarbure de 0,06. La teneur en carbone obtenue est dans ces conditions de 4,0 % poids.

5 g du catalyseur sont chargés dans un réacteur tubulaire isotherme balayé par un débit d'azote de 50 dm3/h. La température du catalyseur est augmentée à la température de combustion. Deux essais sont réalisés : pour le premier, la température de combustion est fixée à 400°C et le gaz comburant est un mélange azote-oxygène contenant 1 % volume d'oxygène. La durée de la combustion est fixée à 6 h. Dans ces conditions, la teneur finale en coke est de 2,1 % poids.

Dans une seconde expérience, la température de combustion est fixée à 400°C et le gaz comburant est un mélange azote-oxygène contenant 1 % volume d'oxygène et 100 ppm de NO introduit sous forme gazeuse. La teneur en carbone résiduelle au bout de 6 h n'est alors plus que de 0,1 % poids, qui peut être considéré comme la limite de détection de la présence de carbone sur le catalyseur. En d'autres termes, en présence de NO, la combustion du coke est totale en 6 h. Ceci permet la régénération du catalyseur à un niveau de température moindre, et la chute de surface spécifique résultant de la combustion du coke est diminuée. En l'absence de NO, la combustion complète du coke menée à 450°C pendant 5 h conduit à une chute de surface spécifique de 350 m2/g (catalyseur neuf) à 270 m2/g. En présence de 100 ppm de NO, la combustion complète du coke est menée à 410°C en 5 h et conduit à une chute de surface spécifique de 350 m2/g (catalyseur neuf) à 300 m2/g, soit 30 m2/g de plus qu'en l'absence d'oxyde d'azote.

EXEMPLE 3 : Traitement comparatif de régénération d'un adsorbant utilisé pour la séparation des n- et iso-paraffines avec introduction de NO.

[0047] Un lit adsorbant est opéré en mode PSA pour séparer les n- des iso-paraffines d'une coupe C5/C6. L'adsorbant est constitué d'un tamis moléculaire additionné d'un liant. C'est un tamis A partiellement échangé Na et Ca. La composition en poids de l'adsorbant est 20,1 % Si, 17,6 % Al, 2,0 % Na, 9,2 % Ca. Le cycle d'adsorption dure 10 minutes, à 250°C sous une pression de 20 bars. La désorption est réalisée par abaissement de la pression jusque à une valeur de 3 bars et strippage au moyen d'un flux riche en hydrogène. Ce processus est opéré durant 3 années, au bout desquelles il s'avère que la capacité du lit adsorbant, c'est-à-dire le poids de n-paraffines retenues en phase adsorption rapportée au poids de tamis, diminue et passe de 2,9 % poids à 2,3 % poids. L'unité est arrêtée et l'adsorbant est déchargé. Il s'avère alors que l'adsorbant contient 1 % poids de matière carbonée, qui ne peut pas être éliminée par un strippage à l'hydrogène, y compris à haute température.

Pour recouvrer la capacité d'adsorption du tamis moléculaire, il s'avère qu'une combustion en atmosphère oxydante du dépôt carboné est nécessaire. Cette combustion doit être menée à la température la plus basse possible, de façon à ne pas nuire à la cristallinité de la zéolithe. L'adsorbant est séparé en deux lots, A et B. La combustion est menée dans un réacteur tubulaire isotherme balayé par un débit d'azote de 50 dm3/h. La température de l'adsorbant est augmentée à la température de combustion. Sur le lot A, la température de combustion est fixée à 400°C et le gaz comburant est un mélange azote-oxygène contenant 1 % volume d'oxygène. La durée de la combustion est fixée à 6 h. Dans ces conditions, la teneur finale en coke est de 0,85 % poids. Sur le lot B, la température de combustion est fixée à 400°C et le gaz comburant est un mélange azote-oxygène contenant 1 % volume d'oxygène et 100 ppm de NO introduit sous forme gazeuse. La teneur résiduelle en carbone au bout de 6 h est de 0,1 % poids. En d'autres termes, en présence de NO, la combustion du coke est totale en 6 h. Ceci permet, en pratique, puisqu'il est nécessaire d'éliminer totalement le dépôt carboné du catalyseur, d'opérer à plus basse température et/ou de mener plus rapidement la combustion. Ceci représente un avantage extrêmement important pour la durée de vie du matériau.

## Revendications

1. Procédé pour la régénération d'une masse usée ayant été utilisée pour le traitement de charges hydrocarbonées contenant au plus 2000ppm d'azote, ladite masse comprenant au moins un oxyde réfractaire et/ou au moins un tamis moléculaire, procédé comprenant une étape de combustion de la matière organique fixée sur ladite masse usée, étape qui se déroule en présence d'un gaz comburant contenant de l'oxygène et un gaz inerte, procédé dans lequel ledit gaz contient également au moins un oxyde d'azote NxOy tel que y/x > 0,5, ledit procédé opérant entre 200-700°C, sous une pression totale de 0,1-4 MPa, et avec une teneur molaire en oxyde d'azote dans le gaz comburant de 0,0001-20 %.

2. Procédé selon la revendication 1, dans lequel l'oxyde d'azote est NO ou NO2.

3. Procédé selon l'une des revendications précédentes, dans lequel, avant d'être soumise à l'étape de combustion, la masse est mise au contact d'au moins un précurseur d'oxyde d'azote, et la température de l'étape de combustion est au moins égale à la température de décomposition du précurseur en oxyde d'azote.

4. Procédé selon l'une des revendications 1 ou 2, dans lequel on introduit dans le gaz comburant au moins un précurseur d'oxyde d'azote, et la température de l'étape de combustion est au moins égale à la température de décomposition du précurseur en oxyde d'azote.

5. Procédé selon l'une des revendications 3 ou 4, dans lequel ledit précurseur et choisi dans le groupe formé par l'ammoniac gazeux ou en solution aqueuse, les acides et les sels des anions nitrate ou nitrite, les sels des cations nitryl, nitrosyl ou ammonium, les composés hydrocarbonés contenant une fonction nitro, nitroso, amino ou ammonium.

6. Procédé selon l'une des revendications précédentes, opérant à une température de 320-550°C.

7. Procédé selon l'une des revendications précédentes, dans lequel la teneur molaire en oxygène est de 0,1-40 %.

8. Procédé selon l'une des revendications précédentes, dans lequel la teneur molaire en oxyde(s) d'azote est inférieure à 500 ppm.

9. Procédé selon l'une des revendications précédentes, dans lequel la teneur molaire en oxyde(s) d'azote est de 1-400 ppm.

10. Procédé selon l'une des revendications précédentes, dans lequel la masse est un catalyseur comprenant au moins un oxyde simple et ne comprenant pas de zéolithe.

11. Procédé selon l'une des revendications 1 à 9, dans lequel la masse est un catalyseur zéolithique.

12. Procédé selon l'une des revendications précédentes, dans lequel la masse contient ou moins un métal noble.

13. Procédé pour la régénération d'un catalyseur usé ayant été utilisé pour la déshydrogénation, l'hydrogénation, les isomérisations, la cyclisation, l'hydrotraitement, l'oxydation partielle, la métathèse, l'alkylation, ou le craquage catalytique de charges peu azotées, le déparaffinage catalytique, ledit catalyseur comprenant au moins un oxyde réfractaire et/ou au moins un tamis moléculaire, procédé comprenant une étape de combustion de la matière organique fixée sur ladite masse usée, étape qui se déroule en présence d'un gaz comburant contenant de l'oxygène et un gaz inerte, procédé dans lequel ledit gaz contient également au moins un oxyde d'azote NxOy tel que y/x > 0,5, ledit procédé opérant entre 200-700°C, sous une pression totale de 0,1-4 MPa, et avec une teneur molaire en oxyde d'azote dans le gaz comburant de 0,0001-20 %.

14. Procédé selon la revendication 13 dans lequel le catalyseur a été utilisé pour l'isomérisation des coupes légères riches en n-alcanes, l'isomérisation d'une coupe C8 aromatique.

15. Procédé selon la revendication 13 dans lequel l'hydrotraitement est un hydrocraquage.

16. Procédé selon l'une des revendications précédentes, dans lequel le catalyseur circule en lit mobile.

17. Procédé selon l'une des revendications 1 à 9, dans lequel la masse est un adsorbant.

Office européen
des brevets

**RAPPORT DE RECHERCHE EUROPEENNE**

Numéro de la demande

EP 98 40 3027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 212 602 A (BAYER AG) 4 mars 1987<br><br>* revendications 1,6; exemples 1,11 *<br>--- | 1,2,6,7,<br>10,12 | B01J38/12<br>B01J23/90<br>B01J23/96<br>B01J29/90 |
| A | EP 0 378 482 A (INST FRANCAIS DU PETROL) 18 juillet 1990<br>----- | | |

DOMAINES TECHNIQUES RECHERCHES (Int.Cl.6)

B01J

Le présent rapport a été établi pour toutes les revendications

| Lieu de la recherche | Date d'achèvement de la recherche | Examinateur |
|---|---|---|
| LA HAYE | 22 février 1999 | Thion, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 3027

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

22-02-1999

| Document brevet cité au rapport de recherche | | Date de publication | Membre(s) de la famille de brevet(s) | | Date de publication |
|---|---|---|---|---|---|
| EP 0212602 | A | 04-03-1987 | DE | 3530820 A | 05-03-1987 |
| | | | BR | 8604109 A | 22-04-1987 |
| | | | DE | 3660746 A | 27-10-1988 |
| | | | JP | 62053745 A | 09-03-1987 |
| | | | US | 4714689 A | 22-12-1987 |
| EP 0378482 | A | 18-07-1990 | FR | 2641712 A | 20-07-1990 |
| | | | FR | 2648363 A | 21-12-1990 |
| | | | FR | 2651153 A | 01-03-1991 |
| | | | AT | 121120 T | 15-04-1995 |
| | | | AU | 633861 B | 11-02-1993 |
| | | | AU | 4797190 A | 19-07-1990 |
| | | | CA | 2007707 A | 13-07-1990 |
| | | | CN | 1045411 A,B | 19-09-1990 |
| | | | DE | 69018487 D | 18-05-1995 |
| | | | DE | 69018487 T | 07-09-1995 |
| | | | ES | 2074550 T | 16-09-1995 |
| | | | US | 5034117 A | 23-07-1991 |

EPO FORM P0460

Pour tout renseignement concernant cette annexe : voir Journal Officiel de l'Office européen des brevets, No.12/82